# DEMANDE DE BREVET EUROPEEN

(11) **EP 2 657 268 A1**
(43) Date de publication de la demande: **30.10.2013**
(21) Numéro de dépôt: 13164544.2
(22) Date de dépôt: 19.04.2013
(51) Int. Cl.: C08G 18/36, C08G 18/64, C08L 75/06, C09D 175/06, C08L 75/04, C08G 18/42, C08G 18/76

(54) **Polyuréthane pour revêtements non aqueux à base de polyester gras hydroxylé biosourcé, modifié à la colophane.**

(30) Priorité: 25.04.2012 FR 1253813
(71) Demandeur: ARKEMA FRANCE, 92700 Colombes (FR)
(72) Inventeur: Herve Grégoire, 56370 Sarzeau (FR)
(74) Mandataire: Killis, Andréas

(57) **Abrégé**

L'invention concerne une composition de résine de polyuréthane pour milieu non aqueux, à base d'un polyester, obtenue à partir de A) un polyester (gras) hydroxylé, avec :
- ledit polyester A) étant le produit de réaction de a) un composant alcool avec b) un composant acide, lequel composant acide b) comprend b1) au moins un acide gras, ledit acide gras ledit composant b) comprenant en plus b2) de la colophane et/ou des dérivés de colophane portant au moins une fonction acide carboxylique, b2) représentant de 30 à 85% en poids, par rapport au poids total de A)
- en option, ledit polyester A) ayant une longueur en huile nulle (0%) ou entre 0 et 60%,
- en option, ledit polyester A) ayant un rapport en poids d'acides (monoacides) gras oxydables par rapport aux acides gras de 0 ou supérieur à 0 et allant jusqu'à 1 et avec ladite résine, étant le produit de réaction dudit polyester polyol A) avec :
B) en option, au moins un polyol ne comportant pas de fonction ionique
C) au moins un polyisocyanate.

La composition de résine polyuréthane de l'invention à base de polyester biosourcé est utilisée comme liant dans les revêtements non aqueux ayant un taux de solides élevé avec une viscosité convenable et un faible taux de COV (ou VOC) et un bon développement de dureté.

## Description

L'invention concerne une composition de résine ou résine de polyuréthane à base d'un polyester polyol gras spécifique modifié à la colophane et donc d'origine biosourcée, des compositions de liant organique et de revêtements non aqueux liés et des utilisations dans le domaine de revêtements en milieu solvant, ayant un caractère biosourcé élevé et des performances particulières.

Les résines alkydes et, en particulier modifiées uréthanes, sont généralement connues et utilisées en particulier dans le domaine des revêtements en milieu solvant.

Parmi les besoins d'améliorations liés aux solutions existantes de l'état de l'art, on peut citer, d'une manière générale, le besoin croissant d'avoir un taux de plus en plus élevé de matières premières d'origine renouvelables, la réduction significative de composés organiques volatiles COV (VOC en anglais) tout en ayant des taux de solides élevés et avec une viscosité convenable et une bonne solubilité. Plus particulièrement, on peut avoir un très bon développement de dureté dans le temps, une bonne résistance chimique, une bonne tenue à l'eau, une bonne adhérence avec un rapport COV (VOC)/extrait sec réduit, comme est significativement réduite la viscosité pour un haut extrait sec donné.

La présente invention permet donc de remédier aux principaux inconvénients de l'état connu de la technique par la structure spécifique de la résine polyuréthane et plus particulièrement par la structure du polyester polyol gras utilisé et encore plus particulièrement par la combinaison de la colophane avec les autres composants.

L'invention concerne d'abord une composition de résine polyuréthane à base d'un polyester gras hydroxylé spécifique modifié à la colophane.

Le deuxième objet de l'invention concerne une composition de liant organique comprenant au moins une composition de résine polyuréthane selon l'invention.

Un troisième objet concerne une composition de revêtement non aqueux comprenant une composition de résine ou une composition de liant comme définis selon l'invention.

L'invention concerne également l'utilisation de la composition de résine de l'invention dans des compositions de revêtements non aqueux.

Finalement, l'invention couvre également un revêtement obtenu à partir d'une résine polyuréthane ou d'une composition de liant ou d'une composition de revêtements aqueux selon l'invention.

Le premier objet de l'invention concerne donc une composition de résine polyuréthane à base de polyester gras, en particulier à base d'alkyde, obtenue à partir de (ou à base de) :
A) au moins un polyester (gras) hydroxylé, avec,
   - ledit polyester A) étant le produit de réaction de a) un composant alcool avec b) un composant acide, lequel composant acide b) comprend b1) au moins un acide gras, ledit acide gras étant choisi parmi b1.1) au moins un monoacide et/ou un polyacide gras oxydable, comportant au moins une insaturation oxydable ou b1.2) au moins un monoacide et/ou un polyacide gras non oxydable ou b1.3) au moins un mélange d'acides gras b1.1) et b1.2) et ledit composant b) comprenant en plus b2) de la colophane et/ou des dérivés de colophane portant au moins une fonction acide carboxylique, ladite colophane et/ou dérivés b2) représentant de 30 à 85%, et de préférence de 35 à 75%, plus préférentiellement de 40 à 75% et encore plus préférentiellement de 45 à 75% en poids, par rapport au poids total de A)
   - en option, ledit polyester A) ayant une longueur en huile nulle (0%) ou entre 0 et 60%, de préférence entre 0 et 35% en poids,
   - en option, ledit polyester A) ayant un rapport en poids d'acides gras oxydables b1.1) par rapport aux acides gras b1.1) + b1.2) globalement, de 0 ou supérieur à 0 et allant jusqu'à 1
      et avec ladite composition de résine (ou également appelée en abrégé « résine ») polyuréthane, étant le produit de réaction dudit polyester polyol A) avec, ou en présence de :
B) en option, au moins un polyol, de préférence diol, sans aucun groupement ionique, en particulier sans aucun groupement acide et
C) au moins un polyisocyanate, de préférence de fonctionnalité allant de 2 à 3, plus particulièrement diisocyanate.

La composition de résine polyuréthane peut être une composition pour résine polyuréthane soluble en milieu solvant, c'est à dire de structure linéaire ou ramifiée. Selon une deuxième option, ladite composition de résine polyuréthane est réticulable et donne lieu à une résine polyuréthane réticulée et insoluble en milieu solvant. Par conséquent, la composition de résine polyuréthane selon l'invention couvre les deux options possibles citées.

Dans le cas d'une résine polyuréthane soluble en milieu solvant, c'est à dire de structure linéaire ou ramifiée, on peut choisir comme polyol B) convenable, s'il est présent, tout diol non porteur de fonction ionique tel qu'une fonction acide. Dans ce cas, le polyol B) joue le rôle d'allongeur de chaîne lors de la réaction de polyaddition entre polyol A) et polyisocyanate C). Dans le cas où la résine est de structure ramifiée, dans ce cas B), s'il est présent, peut être un polyol de fonctionnalité d'au moins 3, comme un triol ou tetrol, sous condition que la fonctionnalité moyenne (par mole) de réactants est telle qu'il n'y a aucune réticulation possible, de préférence avec une fonctionnalité moyenne d'au plus égale à 2. La fonctionnalité moyenne (f_{moy}) des réactants est égale à la somme (sur i) du produit n_{i*}fᵢ pour tout réactant i, où nᵢ et fᵢ représentent respectivement le nombre de moles et la fonctionnalité du réactant i (somme n_{i*}fᵢ) divisée par le nombre total des moles de réactants i (somme de nᵢ).

Dans le cas d'une structure réticulée, le polyol B) peut être tout diol ou triol ou polyol de fonctionnalité supérieure à 3, avec une fonctionnalité moyenne de réactants supérieure à 2. Il peut surtout être un diol seulement si la fonctionnalité moyenne de A) et de C) est bien supérieure à 2 et la fonctionnalité moyenne sur l'ensemble des réactants (A, B et C) supérieure à 2.

Comme exemples de diols, on peut citer : éthylène glycol (EG), diéthylène glycol (DEG), propylène glycol (PG), dipropylène glycol (DPG), butyl glycol (BG) et autres butane diols (BD).

Sont préférés : EG, PG, DEG, DPG, BG.

Comme exemples de triols, on peut citer : triméthylol propane (TMP) alcoxylé ou non alcoxylé, glycérol.

Sont préférés : TMP, glycérol.

Comme exemples de polyols de fonctionnalité supérieure à 3, on peut citer : pentaérythritol (40H), diglycérol (40H), dipentaérythritol (60H), polyglycérol (plus de 40H), le pentaérythritol et diglycérol étant préférés aussi bien pour structure ramifiée que pour structure réticulée.

Comme polyisocyanate C) convenable, on peut en choisir un ayant une fonctionnalité de 2 à 3 en fonction de la fonctionnalité moyenne des polyols A) + B) (si B) est présent). Ainsi, pour une structure ciblée linéaire de la résine, un diisocyanate est à utiliser. Pour une structure ramifiée en plus d'un diisocyanate, un triisocyanate peut être utilisé sous condition que la fonctionnalité moyenne ne conduise pas une structure réticulée (en particulier avec une telle fonctionnalité moyenne ne dépassant pas 2). Pour une structure réticulée, les deux peuvent être utilisés sous condition que la fonctionnalité moyenne sur l'ensemble des réactants soit bien supérieure à 2.

Parmi les diisocyanates convenables, on peut citer : toluène diisocyanate (TDI), isophorone diisocyanate (IPDI), hexaméthylène diisocyanate (HMDI), 4, 4'méthylène diphényl diisocyanate (MDI).

Sont préférés : TDI, IPDI, MDI.

Parmi les triisocyanates convenables, on peut citer : triisocyanates à base de trimères de diisocyanates en particulier à base d'un cycle isocyanurate.

Concernant le polyester polyol gras A) selon l'invention, selon une option, ledit composant acide b) comprend en plus dudit acide gras b1), en plus de ladite colophane et/ou en plus desdits dérivés de colophane b2), au moins un composé acide b3) ayant au moins une fonction acide carboxylique, avec éventuellement en plus, une fonction hydroxyle et une fonctionnalité globale de 2 à 3, avec b3) étant choisi parmi b3.1) les polyacides saturés et/ou b3.2) les polyacides éthyléniquement insaturés ou b3.3) les hydroxy-acides. Ladite fonctionnalité globale englobe les fonctions acides et éventuellement hydroxyles dans le cas de composés b3.3).

Selon une autre possibilité, ledit composé acide b1) est un polyacide gras non oxydable b1.2) et de préférence il comprend au moins un dimère en C₃₆ et/ou au moins un trimère en C₅₄ d'acide gras.

Selon une option, ledit composant alcool a) peut comprendre au moins un polyol de fonctionnalité allant de 2 à 10 et de préférence de 2 à 6. Dans ce cas, ledit polyol peut être sélectionné parmi : éthylène glycol, polyéthylène glycol de préférence de Mw de 300 à 6000, propylène glycol, 1,3-propanediol, dipropylène glycol, triéthylène glycol, glycérol, diglycérol, triméthylol propane (ou éthane), pentaérythritol, dipentaérythritol, sorbitol, mannitol, méthyl glucoside, polyglycérol, en particulier glycérol ou oligomères de glycérol, comme le polyglycérol-3 (trimère de glycérol).

Plus particulièrement, ledit polyester A) a un indice d'acide inférieur à 10, un indice OH supérieur à 25, de préférence allant de 50 à 200 et une masse moléculaire moyenne en nombre Mn, mesurée par GPC (en équivalent Polystyrène dans le THF) allant de 250 à 5000. La masse Mn pourra également être calculée (en restant dans la même plage à partir du bilan matière et de la fonctionnalité des réactants impliqués, ce que l'homme du métier sait faire à partir de ces données.

Dans le polyester A) selon l'invention, ledit acide gras oxydable b1.1) peut être sélectionné parmi les monoacides gras d'origine végétale ou animale, de préférence en C₁₆ à C₂₄, avec un indice d'iode moyen allant de 100 à 200. Selon un autre cas particulier, ledit polyacide b1.2) comprend au moins un dimère d'acide gras en C₃₆ et/ou un trimère d'acide gras en C₅₄ et en ce que ledit polyol a) comprend le glycérol ou au moins un oligomère de glycérol et/ou le pentaérythritol et/ou le dipentaérythritol.

Selon une possibilité plus particulière, il s'agit d'une résine de polyuréthane linéaire ou ramifiée (non réticulée). Dans ce cas, la fonctionnalité moyenne (par mole de réactant) f_{moy} ≤ 2 avec f_{moy} = fonctionnalité moyenne des réactants A) + B) + C) : moyenne de fonctions par mole de réactant. Dans ce cas, ladite résine a de préférence les masses moléculaires moyennes qui peuvent varier de 1000 à 10000, mesurées par GPC ou déterminées par calcul comme précisé ci-haut. Plus particulièrement, dans un tel cas, ladite résine peut porter des groupements hydroxyles, de préférence avec un indice de OH supérieur à 15 et plus préférentiellement supérieur à 20. Une telle résine a un intérêt particulier dans des systèmes de revêtements solvantés bicomposants (appelés couramment 2k), avec comme agents réticulants de type mélamine, polyisocyanate, époxy ou silane.

Selon une deuxième option, ladite composition de résine peut être une composition bicomposante (2k) réticulable de polyuréthane. Dans ce cas, en particulier, f_{moy} > 2, de préférence supérieure à 2,5.

Le deuxième objet de l'invention concerne une composition de liant organique qui comprend au moins une composition de résine telle que définie ci-dessus selon l'invention.

Plus particulièrement, cette composition de liant organique comprend en solution dans au moins un solvant organique, au moins une résine linéaire ou ramifiée telle que définie ci-dessus selon l'invention, de préférence avec un extrait sec (taux de solides) allant de 40 à 90%, plus préférentiellement allant de 70 à 90% en poids.

Selon une deuxième option, ladite composition de liant organique peut comprendre en solution dans au moins un solvant organique, au moins une composition bicomposante (2k) réticulable telle que définie ci-dessus selon l'invention.

La composition de liant selon l'invention peut comprendre selon un cas particulier, au moins une deuxième résine différente de la première (selon l'invention), avec cette deuxième résine étant sélectionnée parmi les résines de polyesters à base d'acides gras, les polyuréthanes, de préférence parmi les résines alkydes modifiées, en particulier modifiées par acrylique ou uréthane ou amide.

Le troisième objet de l'invention concerne une composition de revêtement non aqueux, c'est à dire en milieu solvant organique (ou solvanté), laquelle composition de revêtement comprend comme liant au moins une composition de résine polyuréthane telle que définie ci-dessus selon l'invention ou au moins une composition de liant telle que définie ci-dessus selon l'invention.

Selon une option particulière, ladite composition de revêtement de l'invention est réticulable et comprend au moins une résine telle que définie ci-dessus selon l'invention ayant des fonctions hydroxyles et au moins un agent réticulant multifonctionnel, sélectionné parmi : mélamine, polyisocyanate, polyanhydride, silane, époxy. Dans ce cas, il s'agit d'un revêtement réticulable par les fonctions résiduelles OH de la résine polyuréthane. Cette dernière est linéaire ou ramifiée et donc soluble en milieu solvant organique.

Plus particulièrement, la composition de revêtement concerne un revêtement sélectionné parmi les revêtements non aqueux pour adhésifs, peintures, lasures, primaires et vernis de protection pour intérieur ou extérieur, en particulier pour béton, plâtre, bois, métal, verre, composite, plastique.

Un autre objet couvert par l'invention concerne l'utilisation d'une composition de résine telle que définie ci-dessus selon l'invention ou d'une composition de liant telle que définie ci-dessus selon l'invention, dans des compositions de revêtements non aqueux, de préférence pour applications intérieures ou extérieures de protection en particulier pour béton, plâtre, métal, composite, plastique, plus particulièrement pour applications de revêtements pour automobile, marine, ferroviaire, aéronautique.

Finalement, l'invention couvre également un revêtement de substrat, obtenu à partir d'au moins une composition de résine telle que définie ci-dessus selon l'invention ou d'une composition de liant telle que définie ci-dessus selon l'invention. Plus particulièrement, ledit substrat est choisi parmi : béton, plâtre, bois, métal, composite, plastique, verre, carton.

Les exemples suivants de la partie expérimentale sont présentés pour illustrer l'invention et ses avantages sans limitation aucune de la portée de l'invention.

### Partie expérimentale

### 1) Préparation de résine polyester utilisable comme polyester A) selon l'invention pour la préparation de la résine polyuréthane de l'invention

On charge 354,0 g de colophane de tall (FOR 85 de FORCHEM ayant un indice d'acide de 165-175 mg KOH/g), 92,0 g de glycérol et 274,0 g d'acide gras de tall (SYLFAT^{®} 2 d'Arizona ayant un indice d'iode de 155 et un indice d'acide de 194) puis on chauffe jusqu'à 220-240°C. La condensation est poussée jusqu'à obtenir un indice d'acide < 5 mg KOH/g (4,5 mesuré) pour le polyester final obtenu (684 g), ce qui correspond à un indice OH (mg KOH/g) de 82. On refroidit à 25°C avant d'utiliser cette résine pour l'étape suivante de préparation de la résine polyuréthane de l'invention. La masse moléculaire Mn calculée à partir des données de masses moléculaires et des fonctionnalités des réactants est de 684.

### 2) Préparation de résine polyuréthane soluble selon l'invention et caractéristiques

A 25°C, à la résine polyester (684 g) comme obtenue en 1) dans 230 g de Spirdane^{®} D40 (de Total), on ajoute rapidement en 1 fois 160,0 g de toluènediisocyanate (de Lyondell). On chauffe progressivement jusqu'à 100°C. Lorsque l'indice de NCO atteint 69 mg KOH/g, on introduit 0,33 g de catalyseur (Fastcat^{®} 4100 d'Arkema) et le milieu est agité jusqu'à obtenir un indice de NCO de 65 mg KOH/g. A cet instant, 48,90 g de diglycérol (de Solvay) sont introduits en 1 fois. La réaction est stoppée quand l'indice de NCO atteint 1 mg KOH/g. La résine est filtrée, puis refiltrée sur terre de diatomée.

### 3) Caractéristiques de la résine polyuréthane obtenue selon l'invention

Ces caractéristiques sont présentées au tableau ci-dessous.

| | |
|---|---|
| **Extrait sec** (% en poids de solides dans Spirdane^{®} D40) | 74,3% |
| **Viscosité Brookfield DVII+ à 25°C (mPa.s)** | 6200 |
| **Couleur Gardner (G)** | 6 |
| **Indice OH calculé** (mg KOH/g) | 21 |
| **TDI** | 17% |

### 4) Tests comparatifs réalisés

L'évaluation des performances est effectuée à partir de films appliqués sur plaque de verre d'épaisseur humide de 100 µm. Il s'agit de formulations de vernis brillants siccativés. L'agent de siccativation choisi est un système mono-métallique à base de cobalt (Durham Co 10 WM, 0,1 % de cobalt métal sur liant sec).

### 4.1) Mesure de la dureté des films (méthode ISO 1522)

La dureté mesurée est une dureté Persoz réalisée dans des conditions atmosphériques contrôlées (23°C, 50% d'humidité relative). Les vernis sont appliqués à 100 µm humide, puis séchés sur une surface parfaitement horizontale à 23°C et sous une humidité relative 50%, pendant 24 heures avant la première mesure.

### 4.2) Séchage BK

Un film de 150 microns humide est appliqué sur plaque de verre à 23°C sous une atmosphère contrôlée possédant une humidité relative de 50%. La plaque est alors positionnée sous l'appareil de mesure, sous une aiguille qui se déplace sur toute la longueur de la plaque selon une échelle de temps réglable (préalablement réglée à 12h-24h-48h). En analysant l'empreinte laissée par l'aiguille sur le film, les diverses étapes du séchage pourront être déterminées :
- Le premier stade (BK1) qui est une empreinte piriforme correspond à la durée d'évaporation du solvant.
- Le deuxième stade (BK2) est le traçage d'une piste continue correspondant à la transition sol-gel.
- Le troisième stade (BK3) est une piste interrompue correspondant au temps de séchage en surface.
- Le quatrième stade (BK4) qui est le moment où l'aiguille ne pénètre plus dans la peinture correspond au séchage final à coeur.

### 5) Résultats comparatifs par performance

La résine de l'invention est comparée par rapport à une résine représentant l'état de l'art connu, qui est une alkyde uréthanisée commerciale à faible extrait sec (Unithane^{®} 655 WD 55 d'Arkema) ayant des bonnes performances mais conduisant à des formulations de peintures à COV élevé. Un bon compromis dureté/séchage/COV a été obtenu avec la résine de l'invention comme démontré dans le tableau ci-dessous :

| Résines | Invention | Unithane^{®} 655 WD 55 |
|---|---|---|
| | invention | référence marché |
| Extrait sec (% poids) | 74,3% | 55% |
| Viscosité 25°C (mPa.s) | 6200 | 2000 |
| COV | bon | médiocre |
| TDI | 17% | 14% |
| Dureté pendulaire (Persoz) à 23°C | | |
| 24 h | 120 | 144 |
| 4 jours | 297 | 204 |
| 7 jours | 350 | 242 |

| Séchage à 23°C 0,1% Co métal | | |
|---|---|---|
| BK1 | 25' | 10' |
| BK2 | 2h20 | 25' |
| BK3 | 3h20 | 1h00 |
| BK4 | 5h30 | 1h40 |

On obtient grâce à la présence de colophane de bonnes propriétés en terme de solubilité, extrait sec et viscosité ainsi qu'un bon niveau de dureté. Le séchage dans les premiers instants est quelque peu retardé en présence de colophane mais après les premières 24 heures d'application, les performances s'approchent de la résine de référence (standard de gamme à faible extrait sec) et surpasse même de façon spectaculaire la dureté de la résine de référence au-delà de 24 heures. A travers cet exemple, nous montrons qu'il est possible d'obtenir selon le concept de l'invention des propriétés pour peintures possédant un excellent compromis séchage/dureté/COV.

## Revendications

1. Composition de résine polyuréthane à base de polyester gras, en particulier à base d'alkyde, **caractérisée en ce qu'**elle est obtenue à partir de A) : au moins un polyester (gras) hydroxylé, avec :
- ledit polyester A) étant le produit de réaction de a) un composant alcool avec b) un composant acide, lequel composant acide b) comprend b1) au moins un acide gras, ledit acide gras étant choisi parmi b1.1) au moins un monoacide et/ou polyacide gras oxydable, comportant au moins une insaturation oxydable ou b1.2) au moins un monoacide et/ou polyacide gras non oxydable ou b13) au moins un mélange d'acides gras b1.1) et b1.2) et ledit composant b) comprenant en plus b2) de la colophane et/ou des dérivés de colophane portant au moins une fonction acide carboxylique, ladite colophane et/ou dérivés b2) représentant de 30 à 85%, et de préférence de 35 à 75%, plus préférentiellement de 40 à 75% et encore plus préférentiellement de 45 à 75% en poids, par rapport au poids total de A)
- en option, ledit polyester A) ayant une longueur en huile nulle (0%) ou entre 0 et 60%, de préférence entre 0 et 35% en poids,
- en option, ledit polyester A) ayant un rapport en poids d'acides gras oxydables b1.1) par rapport aux acides gras b1.1) + b1.2) globalement, de 0 ou supérieur à 0 et allant jusqu'à 1
et avec ladite composition de résine polyuréthane étant le produit de réaction dudit polyester polyol A) avec ou en présence de :
B) en option, au moins un polyol, de préférence diol, sans aucun groupement ionique, en particulier sans aucun groupement acide et
C) au moins un polyisocyanate, de préférence de fonctionnalité allant de 2 à 3, plus particulièrement diisocyanate.

2. Composition de résine selon la revendication 1, **caractérisée en ce que** ledit composant acide b) comprend en plus dudit acide gras b1), en plus de ladite colophane et/ou en plus desdits dérivés de colophane b2), au moins un composé acide b3) ayant au moins une fonction acide carboxylique, avec éventuellement en plus, une fonction hydroxyle et une fonctionnalité globale de 2 à 3, avec b3) étant choisi parmi b3.1) les polyacides saturés et/ou b3.2) les polyacides éthyléniquement insaturés ou b3.3) les hydroxy-acides.

3. Composition de résine selon la revendication 1 ou 2, **caractérisée en ce que** ledit composé acide b1) est un polyacide gras non oxydable b1.2) et de préférence il comprend au moins un dimère en C₃₆ et/ou au moins un trimère en C₅₄ d'acide gras.

4. Composition de résine selon l'une des revendications 1 à 3, **caractérisée en ce que** ledit composant alcool a) comprend au moins un polyol de fonctionnalité allant de 2 à 10 et de préférence de 2 à 6.

5. Composition de résine selon la revendication 4, **caractérisée en ce que** ledit polyol est sélectionné parmi : éthylène glycol, polyéthylène glycol de préférence de Mw de 300 à 6000, propylène glycol, 1,3-propanediol, dipropylène glycol, triéthylène glycol, glycérol, diglycérol, triméthylol propane (ou éthane), pentaérythritol, dipentaérythritol, sorbitol, mannitol, méthyl glucoside, polyglycérol, en particulier glycérol ou oligomères de glycérol, comme le polyglycérol-3 (trimère de glycérol).

6. Composition de résine selon l'une des revendications 1 à 5, **caractérisée en ce que** ledit polyester A) a un indice d'acide inférieur à 10, un indice OH supérieur à 25, de préférence allant de 50 à 200 et une masse moléculaire moyenne en nombre Mn, mesurée par GPC (en équivalent Polystyrène dans le THF) ou calculée, allant de 250 à 5000.

7. Composition de résine selon l'une des revendications 1 à 6, **caractérisée en ce que** ledit acide gras oxydable b1.1) est sélectionné parmi les monoacides gras d'origine végétale ou animale, de préférence en C₁₆ à C₂₄, avec un indice d'iode moyen allant de 100 à 200.

8. Composition de résine selon l'une des revendications 1 à 7, **caractérisée en ce que** ledit polyacide b1.2) comprend au moins un dimère d'acide gras en C₃₆ et/ou un trimère d'acide gras en C₅₄ et **en ce que** ledit polyol a) comprend le glycérol ou au moins un oligomère de glycérol et/ou le pentaérythritol et/ou le dipentaérythritol.

9. Composition de résine selon l'une des revendications 1 à 8, **caractérisée en ce qu'**il s'agit d'une résine de polyuréthane linéaire ou ramifiée (non réticulée).

10. Composition de résine selon la revendication 9, **caractérisée en ce que** ladite résine porte des groupements hydroxyles, de préférence avec un indice de OH supérieur à 15 et plus préférentiellement supérieur à 20.

11. Composition de résine selon l'une des revendications 1 à 8, **caractérisée en ce qu'**il s'agit d'une composition bicomposante (2k) réticulable de polyuréthane.

12. Composition de liant organique, **caractérisée en ce qu'**elle comprend au moins une composition de résine telle que définie selon l'une des revendications 1 à 11.

13. Composition de liant organique selon la revendication 12, **caractérisée en ce que** ladite composition de liant comprend en solution, dans au moins un solvant organique, au moins une résine linéaire ou ramifiée telle que définie selon la revendication 9 ou 10, de préférence avec un extrait sec allant de 40 à 90%, plus préférentiellement allant de 70 à 90%.

14. Composition de liant organique selon la revendication 12, **caractérisée en ce que** ladite composition de liant comprend en solution, dans au moins un solvant organique, au moins une composition bicomposante (2k) réticulable, telle que définie selon la revendication 11.

15. Composition de liant selon la revendication 12 à 14, **caractérisée en ce qu'**en plus de la composition de résine telle que définie selon l'une des revendications 1 à 11, elle comprend au moins une deuxième résine différente de la première, avec cette deuxième résine étant sélectionnée parmi les résines de polyesters à base d'acides gras, les polyuréthanes, de préférence parmi les résines alkydes modifiées, en particulier modifiées par acrylique ou uréthane ou amide.

16. Composition de revêtement non aqueux, **caractérisée en ce qu'**elle comprend comme liant au moins une composition de résine polyuréthane telle que définie selon l'une des revendications 1 à 11 ou au moins une composition de liant telle que définie selon l'une des revendications 12 à 15.

17. Composition de revêtement selon la revendication 16, **caractérisée en ce qu'**elle est réticulable et qu'elle comprend au moins une résine telle que définie selon la revendication 10 et au moins un agent réticulant multifonctionnel, sélectionné parmi : mélamine, polyisocyanate, polyanhydride, silane, époxy.

18. Composition de revêtement selon la revendication 17, **caractérisée en ce que** ledit revêtement est sélectionné parmi les revêtements non aqueux pour adhésifs, peintures, lasures, primaires et vernis de protection pour intérieur ou extérieur, en particulier pour béton, plâtre, bois, métal, verre, composite, plastique.

19. Utilisation d'une composition de résine telle que définie selon l'une des revendications 1 à 11 ou d'une composition de liant telle que définie selon l'une des revendication 12 à 15, dans des compositions de revêtements non aqueux, de préférence pour applications intérieures ou extérieures de protection en particulier pour béton, plâtre, métal, composite, plastique, plus particulièrement pour applications de revêtements pour automobile, marine, ferroviaire, aéronautique.

20. Revêtement de substrat, **caractérisé en ce qu'**il est obtenu à partir d'au moins une composition de résine telle que définie selon l'une des revendications 1 à 11 ou d'une composition de liant telle que définie selon l'une des revendications 12 à 15.

21. Revêtement selon la revendication 20, **caractérisé en ce que** ledit substrat est choisi parmi : béton, plâtre, bois, métal, composite, plastique, verre, carton.
